# EUROPÄISCHE PATENTANMELDUNG

(11) **EP 0 777 958 A1**
(43) Veröffentlichungstag der Anmeldung: **11.06.1997**
(21) Anmeldenummer: 96119432.1
(22) Anmeldetag: 04.12.1996
(51) Int. Cl.: A01D 34/66, A01D 69/08, F16D 3/74

(54) **Mähmaschine**

(30) Priorität: 05.12.1995 DE 19545279
(71) Anmelder: Maschinenfabriken Bernard Krone GmbH, D-48480 Spelle (DE)
(72) Erfinder: Krone, Bernard, 48480 Spelle (DE); Horstmann, Josef, Dipl.-Ing., 49479 Ibbenbüren (DE)

(57) **Zusammenfassung**

Mähmaschine mit einer Anzahl auf einem Mähholm (11) angebrachten, rotierenden Schneidorganen (6), welche an ihrem Umfang zumindest zwei drehbeweglich angeordnete, infolge der Fliehkraft radial nach außen stehende Schneidwerkzeuge (10) aufweisen, mit die rotierenden Schneidorgane (6) von unten antreibende, im Mähholm (11) untergebrachte und Zahnräder umfassende Antriebsorgane (17), wobei jedes von unten angetriebene, rotierende Schneidorgan (6) fest mit einer um eine entsprechende vertikale Achse (25) rotierende Welle (19) verbunden ist, die zu diesem Zweck in einer im Mähholm (11) untergebrachten Lagerung (22,23,24,26) geführt ist und wobei die Welle (19) an ihrem unteren Ende mit einem der Zahnräder (15,16) der Antriebsorgane (17) in fester Antriebsverbindung (18) steht, wobei die jeweilige Antriebsverbindung (18) von den im Mähholm (11) angeordneten Antriebsorganen (17) zu den Schneidorganen (6) ein eine beim schlagartigen Blockieren eines Schneidorganes (6) sich entladende kinetische Rotationsenergie aufnehmendes und während eines von der Antriebsverbindung (18) des Schneidorganes (6) durchlaufenen Drehwinkels die kinetische Rotationsenergie abbauendes bzw. dämpfendes und anschließend wieder aufbauendes Kupplungselement (21) aufweist.

## Beschreibung

Die vorliegende Erfindung bezieht sich auf eine Mähmaschine, insbesondere ein Scheibenmähwerk gemäß dem Oberbegriff des Anspruchs 1. Derartige Mähmaschinen sind für sich bekannt und werden hauptsächlich beim Ernten von Gras oder dgl. Halmgüter eingesetzt. Im Betrieb können sie an eine Dreipunkthubvorrichtung eines landwirtschaftlichen Ackerschleppers oder dgl. Zugmaschinen angehängt werden, wobei ihre rotierenden Schneidorgane über eine Zapfwelle vom landwirtschaftlichen Ackerschlepper aus antreibbar sind. Die Schneidorgane sind dabei als Mähteller ausgeführt, die an ihrem Umfang zumindest zwei drehbeweglich angebrachte und infolge der Fliehkraft radial nach außen stehende, als Mähklingen ausgebildete Schneidwerkzeuge aufweisen. Damit die Mähklingen eine Schneidwirkung erzeugen, ist es notwendig, die als Mähteller ausgeführten Schneidorgane mit einer sehr hohen Drehzahl anzutreiben, die in einem Bereich von 3000 bis 3200 U/min oder sogar noch höher liegt.

Im Verlauf des Mäheinsatzes kann es vorkommen, daß die rotierenden Schneidorgane mit einem Hindernis, wie beispielsweise Steine in Berührung kommen. Dabei wird das betroffene Schneidorgan schlagartig abgebremst, während die Mähmaschine vom Ackerschlepper weiterhin angetrieben wird. Auf das Antriebsorgan des blockierten Schneidorganes entlädt sich dann die aufgrund der Masse und der hohen Drehgeschwindigkeit in den übrigen nicht blockierten Schneidorganen gespeicherte kinetische Rotationsenergie und die vom Ackerschlepper gelieferte Antriebsenergie und verursacht dabei Brüche an den aus Zahnrädern bestehenden Antriebsorganen. Derartige Schäden erfordern langwierige Reparaturen, die längere Stillstandzeiten und hohe Kosten zur Folge haben.

In einer EP 0 366 580 B1 wird dazu vorgeschlagen, die die Schneidorgane mit den Antriebsorganen verbindende Welle oberhalb ihrer Lagerung mit einer als Bruchzone vorgesehenen Nut zu versehen. Dadurch soll bei einem Aufprall eines Schneidorganes auf ein Hindernis der Bruch nicht an den Zahnrädern der Antriebsorgane sondern im Bereich der Bruchzone (Sollbruchstelle) der Welle eintreten. Somit wird die Antriebsverbindung zwischen den Schneidorganen und den Antriebsorganen der Mähmaschine unterbrochen. Das bedeutet, daß bei einem Bruch der Welle Schneidorgane von der Mähmaschine wegfliegen können und somit von dieser Konstruktion erhebliche Sicherheitsrisiken ausgehen. Ein weiterer Nachteil ist darin zu sehen, daß die Bruchzone in einem Bereich vorgesehen ist, der im Hinblick auf einen Dauerbruch der Welle besonders gefährdet ist. Bedingt durch die hohe Drehzahl der Schneidorgane treten selbst bei kleinen Unwuchten wie beispielsweise eine abgebrochene Mähklinge große Biegekräfte an der Welle auf und verursachen unter Mithilfe der vergrößerten Kerbwirkung der Bruchzone einen Dauerbruch der Welle.

In einer US 2 625 784-A wird eine Mähmaschine mit einer Vielzahl von Schneidelementen vorgeschlagen, die von in gleicher Richtung rotierenden, kreisförmigen und an ihrem Umfang mit einer Verzahnung versehenen Sägen gebildet wird. Die mit einer Drehzahl von 800 bis 1500 U/min rotierenden Sägen weisen dabei eine überlappende Anordnung auf, so daß hinsichtlich der Stellung benachbarter Sägen zueinander keine besonderen Vorgaben zu beachten sind. Der Antrieb der als Sägen ausgeführten Schneidelemente beinhaltet eine aus einem Ober- und einem Unterteil bestehende Klauenkupplung, wobei eine Drehmomentübertragung vom Unter- auf das Oberteil mittels Gummidämpfungskörpern erfolgt, die hauptsächlich der Absicherung der Sägen gegen Verstopfungen durch schwer zu schneidende Materialien dient. Eine Sicherung gegen einen Aufprall der beschriebenen Schneidelemente auf Steine oder dgl. Hindernisse ist hier nicht beabsichtigt, da infolge der kreisrunden Bauform der Sägen derartige Probleme auszuschließen sind. Hinsichtlich der Größe der beim Aufprall eines mit hoher Drehzahl rotierenden Schneidorganes auf ein Hindernis von den übrigen nicht blockierten Schneidorganen abgegebenen kinetischen Rotationsenergie sowie der weiterhin bereitgestellten Antriebsenergie kann von derartigen, vorstehend beschriebenen Kupplungen kein ausreichender Verdrehwinkel bzw. Absorptionsbereich der sich entladenden Energie erwartet werden. Bei der Ermittelung der Größe der sich bei einer kurzzeitigen Blockierung eines Schneidorganes entladenden kinetischen Rotationsenergie geht in der Berechnungsformel die Drehzahl der Schneidorgane quadratisch ein, so daß eine Verdoppelung bzw. eine Vervierfachung der Drehzahl der Schneidorgane eine Energieerhöhung zur Folge hat, die vier- bzw. sechzehn mal so groß ist.

Eine alternativ dazu aufgeführte, einer Rutschkupplung entsprechenden Kupplung im Antrieb der als Sägen ausgeführten Schneidelemente kann das Problem ebenfalls nicht lösen, da benachbarte Schneidorgane eine fest vorgegebene Anordnung beibehalten müssen, damit die Mähklingen benachbarter Schneidorgane nicht aneinander schlagen.

Gemäß einer weiteren DE 38 19 793 A1 ist bei einem Schleuderdüngerstreuer zur Ausbringung von unterschiedlichen Düngersorten zwischen einer mit geringer Drehzahl umlaufenden Schleuderscheibe und deren Antriebswelle ein elastisches Dämpfungselement angeordnet. Dieses Dämpfungselement soll in der Anlaufphase nach dem Einschalten des Antriebes für die jeweilige Schleuderscheibe eine gewisse Dämpfung ergeben, so daß die Anlaufmomentspitze reduziert und das Antriebssystem der Schleuderscheiben vor hohen Belastungsspitzen geschützt wird. Ein derartiges mit Mitnehmernasen als Schnappverschlußverbindung mit der Schleuderscheibe ausgebildetes Dämpfungselement läßt sich bei Antriebsverbindungen von mit hoher Drehzahl rotierenden Schneidorganen von Mähwerken nicht verwenden. Bei rotierenden Schneidorganen eines Mähwerkes ist nicht, wie oben bereits erwähnt, die Anlaufmomentspitze entscheidend, sondern ein plötzliches und schlagartiges durch Hindernisse am Erdboden auftretendes Blockieren eines einzelnen Schneidorgans. Der Antrieb der einzelnen Schneidorgane muß dann die kinetische Rotationsenergie der übrigen nicht blockierten Schneidorgane und die Antriebsenergie der Antriebsmaschine des Mähwerkes aufnehmen. Eine derartig große sich entladende kinetische Rotationsenergie würde ein Dämpfungselement gemäß der DE 38 19 793 A1 mit Sicherheit zerstören.

In einer weiteren DE 44 10 836 A1 wird eine Federeinrichtung für rotierend angetriebene Bodenbearbeitungswerkzeuge einer Bodenbarbeitungsmaschine offenbart, deren Aufgabe darin bestehen soll, Kraft- bzw. Drehmomentspitzen im Antrieb der Bodenbearbeitungswerkzeuge beim Auftreffen der Bodenbearbeitungswerkzeuge auf Steine oder dgl. Hindernisse abzubauen. Dabei ist es vorgesehen, beispielweise über vorgespannt eingebaute Blattfederelemente eine federnde Verbindung zwischen einem Antriebszahnradkranz und einer Nabe des Bodenbearbeitungswerkzeuges aufzubauen. Um Überbeanspruchungen der Blattfederelemente zu vermeiden, ist der federnd, nachgiebige Verdrehbereich der Bodenbearbeitungswerkzeuge durch Anschlagelemente begrenzt. Die vorstehend beschriebene Federeinrichtung dient somit einem federnden und sich über einen relativ kleinen Verdrehwinkel erstreckenden Abfangen von Kraft- bzw. Drehmomentspitzen, die über eine normale Beanspruchung der Bodenbearbeitungswerkzeuge hinausgeht. Eine Aufnahme bzw. Dämpfung der beim schlagartigen Aufprall von einem Schneidorgan einer Mähmaschine auf einen Stein oder einem ähnlichen feststehenden Hindernis sich von den übrigen Schneidorganen entladende große Rotationsenergie kann daher von der vorstehend beschriebenen Federeinrichtung nicht erreicht werden.

Aufgabe der vorliegenden Erfindung ist es daher, eine Mähmaschine, insbesondere ein Scheibenmähwerk der eingangs genannten Art zu schaffen, bei der mittels einer baulich einfachen, benutzerfreundlichen und sicherheitstechnisch unbedenklichen Einrichtung die Antriebselemente der Schneid- bzw. Mähorgane gegen Gewaltbrüche oder dgl. Beschädigungen geschützt werden, welche während eines kurzzeitigen Aufpralls eines Schneidorganes auf ein feststehendes Hindernis bei der Entladung der kinetischen Rotationsenergie der übrigen nicht blockierten Schneidorgane an den Antriebselementen der Schneidorgane auftreten können. Nach einem Aufprall soll mit Hilfe der genannten Einrichtung eine erneute Beschleunigung des betroffenen Schneidorganes auf die Betriebsdrehzahl möglich sein, wobei vom Benutzer keine Eingriffe erforderlich sind.

Diese Aufgabe wird erfindungsgemäß durch die im kennzeichnenden Teil des Anspruches 1 aufgeführten Merkmale gelöst. Hinsichtlich der weiteren Ausgestaltung der Erfindung wird auf die Ansprüche 2 bis 18 verwiesen.

Bei einer gattungsgemäßen Mähmaschine befinden sich auf einem Mähholm mehrere nebeneinander angeordnete, um eine aufrechtstehende Achse rotierende Schneidorgane, die an ihrem Umfang zumindest zwei drehbeweglich angebrachte, als Mähklingen ausgeführte und durch die Fliehkraft bei der Rotation mit hoher Drehzahl radial nach außen stehend eine Schneidwirkung erzeugende Schneidwerkzeuge aufweisen. Die Antriebsdrehzahl der Schneidorgane liegt dabei in einem Bereich von 3000 bis 3200 U/min. Diese Schneidorgane werden dabei von Antriebsorganen angetrieben, welche innerhalb des Mähholmes untergebracht sind und Stirnräder umfassen. Mittels einer Welle, die mit einem der im Mähholm untergebrachten Stirnräder fest verbunden ist, sowie weiterer Verbindungselemente wird eine Antriebsverbindung zwischen den Antriebsorganen im Mähholm und den Schneidorganen hergestellt.

Erfindungsgemäß umfaßt diese Antriebsverbindung ein eine beim schlagartigen Blockieren eines Schneidorganes sich entladende kinetische Rotationsenergie aufnehmendes und während eines von der Antriebsverbindung des Schneidorganes durchlaufenen Drehwinkels die kinetische Rotationsenergie abbauendes bzw. dämpfendes Kupplungselement, das so ausgeführt sein kann, daß die Antriebsverbindung zwischen dem jeweiligen Schneidorgan und dem dazugehörigen Antriebsorgan im Mähholm nicht unterbrochen wird. Das Kupplungselement kann dabei ein ein Schneidorgan tragendes Element sein oder als ein Verbindungselement zwischen dem Schneidorgan und der auf der drehbar gelagerten Welle angebrachten Nabe vorgesehen sein. Es ist jedoch auch denkbar das Kupplungselement als ringähnliches Verbindungs- und Tragelement auszubilden, mit dem das als Mähteller ausgeführte Schneidorgan mit einer auf der drehbar gelagerten Welle angebrachten Nabe lösbar verbunden ist. Zu diesem Zweck weist das Kupplungselement im oberen und unteren Bereich Anschraubflansche auf, über die mittels Schraubverbindungen oder ähnlichen Verbindungsmitteln eine formschlüssige Verbindung zwischen dem als Mähteller ausgeführten Schneidorgan und der Nabe hergestellt wird. Zwischen den Anschraubflanschen des Kupplungselementes befindet sich ein Verformungselement mit einer einem Kreisring entsprechenden Querschnittsfläche, welches aus einem hochelastischen, Stoß- und Schlagbelastung aufnehmenden bzw. ausgleichenden und Drehschwingungen dämpfenden bzw. abbauenden Material, beispielsweise einem gummiähnlichen Material besteht. Dieses Verformungselement weist dabei jedoch eine ausreichende Formstabilität auf, so daß bei der Arbeit der Schneidorgane ein exakter Rundlauf der Schneidorgane gewahrleistet ist. Hinsichtlich der Erreichbarkeit optimaler Rundlaufeigenschaften kann es vorteilhaft sein, daß der im unteren Bereich des Kupplungselementes sich befindende Anschraubflansch mit einem geringen Spiel auf der Nabe geführt wird. Dadurch ist es ausgeschlossen, daß sich das Schneidorgan bei der Drehbewegung infolge von Unwuchten oder während der Beschleunigung auf seine Betriebsdrehzahl beim Durchlauf kritischer Resonanzzustände aus seinem Drehzentrum verlagert. Aus Gründen der Gewichtseinsparung kann es sich weiterhin als vorteilhaft erweisen, die Anschraubflansche des Kupplungselementes nicht als Stahlteile sondern als Leichtmetall- oder Kunststoffteile auszubilden.

Im Falle einer heftigen Stoß- und Schlagbelastung, hervorgerufen beispielsweise durch den Aufprall eines Schneidorganes auf einen Stein oder dgl. Hindernisse findet nun bei der Entladung der von den übrigen, nicht blockierten Schneidorganen gespeicherten kinetischen Rotationsenergie sowie der weiterhin bereitgestellten Antriebsenergie eine energieaufnehmende bzw. energieabbauende Verformung im Kupplungselement des blockierten Schneidorganes statt. Dabei tritt eine Verdrehung des im oberen Bereich des Kupplungselementes angeordneten Anschraubflansches gegenüber dem unteren Anschraubflansch auf, wobei der Verdrehwinkel eine Größe einnimmt, die proportional zur Größe der von den nicht blockierten Schneidorganen abgegebenen kinetischen Rotationsenergie und der von der Antriebsquelle gelieferten Antriebsenergie ist. Der Verdrehwinkel kann dabei Werte von bis zu 180 Grad annehmen. Bei diesem Vorgang findet keine Unterbrechung der Antriebverbindung statt, so daß nach einer heftigen Stoß- und Schlagbelastung eines Schneidorganes die Beschleunigung des Schneidorganes auf seine Betriebsdrehzahl durch die Abgabe der während der Stoß- und Schlagbelastung vom Kupplungselement aufgenommenen Energie unterstützt wird.

Gemäß der Erfindung ist es in einem weiteren Ausführungsbeispiel möglich, die jeweilige Antriebsverbindung zwischen dem als Mähteller ausgeführten Schneidorgan und dem im Mähholm untergebrachten Antriebsorgan derartig auszubilden, daß das Verformungselement des Kupplungselementes im oberen Bereich einen Flansch zur Aufnahme des Schneidorganes aufweist und in seinem unteren Bereich direkt mit der auf der drehbaren Welle angeordneten Nabe verbunden ist. Dieses Ausführungsbeispiel zeichnet sich durch einen einfacheren Aufbau aus und stellt dadurch eine kostengünstige Alternative dar.

In einer Weiterbildung der Erfindung ist es auch vorstellbar, das in der jeweiligen Antriebsverbindung untergebrachte Kupplungselement so auszuführen, daß bei einer heftigen Stoß- und Schlagbelastung eines Schneidorganes die Antriebsverbindung unterbrochen wird und nach der Stoß- und Schlagbelastung nach einem vorgegebenen, von der Antriebsverbindung des Schneidorganes durchlaufenen Drehwinkels wieder hergestellt wird. Dadurch kann die während der Stoß- und Schlagbelastung von den übrigen, nicht blockierten Schneidorganen abgegebene kinetische Rotationsenergie bzw. die von der Antriebsquelle bereitgestellte Antriebsenergie frei abfließen, so daß auch bei dieser Lösung ein wirkungsvoller Schutz der Antriebsorgane gegen Überbeanspruchungen und Gewaltbrüchen gegeben ist. Ein Kupplungselement mit den vorstehend aufgeführten Eigenschaften kann beispielsweise als Nocken- oder Mitnehmerkupplung ausgebildet sein, wobei die Antriebsverbindung zumindest nach einem von der Antriebsverbindung des Schneidorganes durchlaufenen Drehwinkel von 120 Grad bei einem mit drei Schneidwerkzeugen besetzten Schneidorgan oder zumindest nach 180 Grad bei einem mit zwei Schneidwerkzeugen ausgeführten Schneidorgan bzw. einem ganzzahligen Vielfachen davon wieder hergestellt wird.

Eine detaillierte Beschreibung des Gegenstandes der Erfindung erfolgt nun anhand von Ausführungsbeispielen. In den Zeichnungen stellen im einzelnen dar:
- Fig.1: eine teilweise abgebrochene Draufsicht einer erfindungsgemäßen Mähmaschine;
- Fig.2: eine teilweise abgebrochene, vergrößerte Darstellung der Einzelheit X in Fig.1;
- Fig.3: eine Schnittdarstellung eines ersten Ausführungsbeispieles einer Antriebsverbindung eines Schneidorganes mit einem Antriebsorgan gemäß Schnitt III - III in Fig.2;
- Fig.4: eine Schnittdarstellung eines weiteren Ausführungsbeispieles einer Antriebsverbindung eines Schneidorganes mit einem Antriebsorgan gemäß Schnitt III - III in Fig.2;

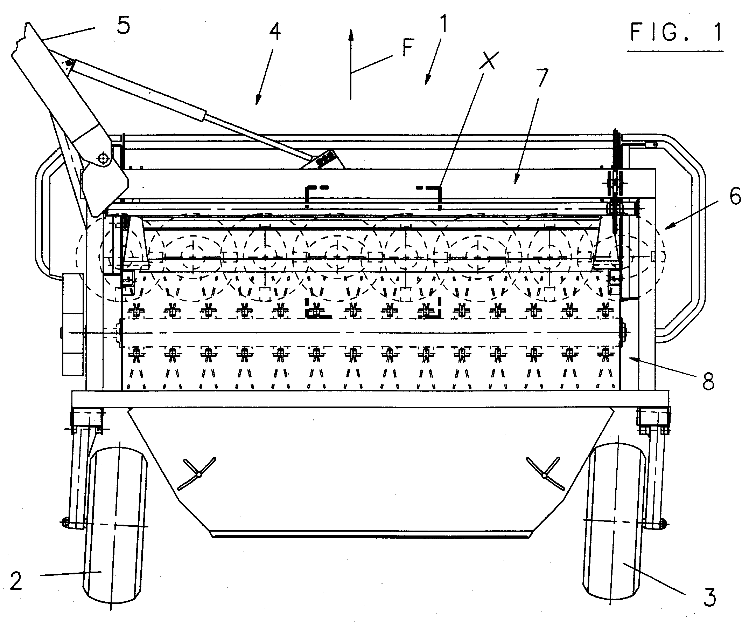

Eine erfindungsgemäße Mähmaschine 1, insbesondere ein Scheibenmähwerk zum Ernten von Gras oder dgl. Halmgüter ist in Fig.1 dargestellt und besteht im wesentlichen aus einem sich über Laufräder 2,3 gegenüber dem Erdboden abstützenden Hauptrahmen 4, der mittels einer schwenkbaren Deichsel 5 an eine Dreipunkthubvorrichtung eines nicht dargestellten landwirtschaftlichen Ackerschleppers oder dgl. Zugmaschine angehängt werden kann. Eine mit mehreren, quer zur Fahrt- und Arbeitsrichtung F angeordneten Schneidorganen 6 besetzte Mäheinheit 7 sowie eine dieser nachgeordneten Förder- und Aufbereitungsvorrichtung 8 sind am Hauptrahmen 4 der Mähmaschine 1 befestigt. Der Gegenstand der Erfindung beschränkt sich dabei keineswegs nur auf das in Fig.1 dargestellte Ausführungsbeispiel. Gleichermaßen ist es möglich der Erfindung eine Mähmaschine mit einer anderen Bauart zugrunde zu legen, beispielsweise eine Mähmaschine, die für den Front- bzw. Heckanbau an eine Hubvorrichtung eines landwirtschaftlichen Ackerschleppers vorgesehen ist. Über nicht näher bezeichnete hydraulische Hebemittel kann die Mäheinheit 7 mit der Förder- und Aufbereitungsvorrichtung 8 aus einer Transportstellung in eine Arbeits- und Betriebsstellung abgesenkt werden bzw. aus der Arbeits- und Betriebsstellung nach einem Mäheinsatz in die Transportstellung überführt werden.

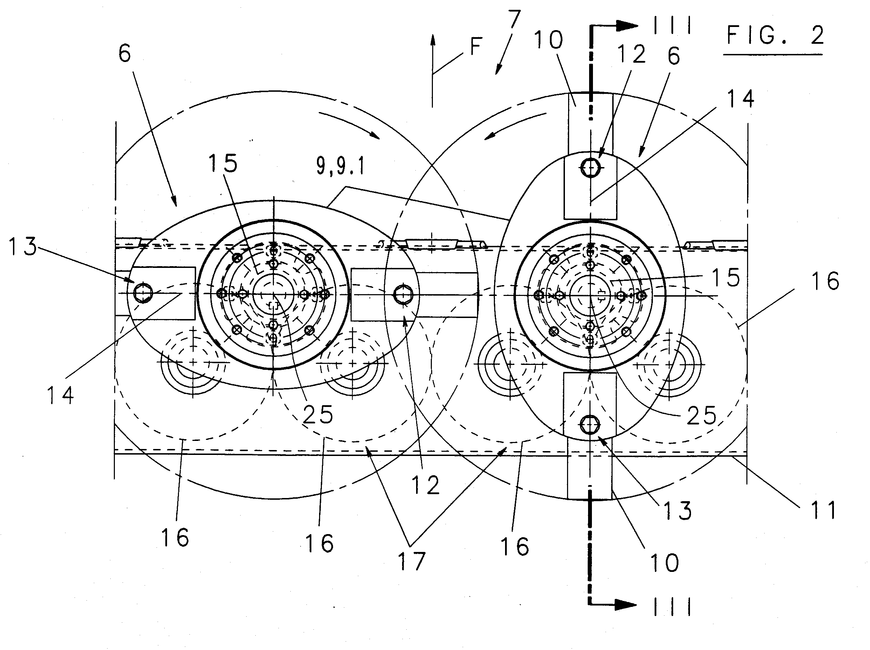

In einem in Fig.2 veranschaulichten Teilabschnittes der Mäheinheit 7 sind zwei als Mähteller 9,9.1 ausgebildete Schneidorgane 6 dargestellt, die an ihrem Umfang zwei drehbeweglich angeordnete und als Mähklingen 10 ausgeführte Schneidwerkzeuge aufweisen und in einem Mähholm 11 gelagert sind. Infolge der Fliehkraft bei einer Rotationsbewegung der Schneidorgane 6 mit hoher Drehzahl gelangen die Mähklingen 10 in eine radial nach außen stehende Schneidstellung. Damit die Mähklingen 10 benachbarter Schneidorgane 6 nicht aneinander schlagen, sind die Schneidorgane 6 bezüglich einer durch die Anlenkpunkte 12,13 der Mähklingen 10 sich erstreckende Symmetrieebene 14 um 90 Grad gegeneinander versetzt angeordnet.

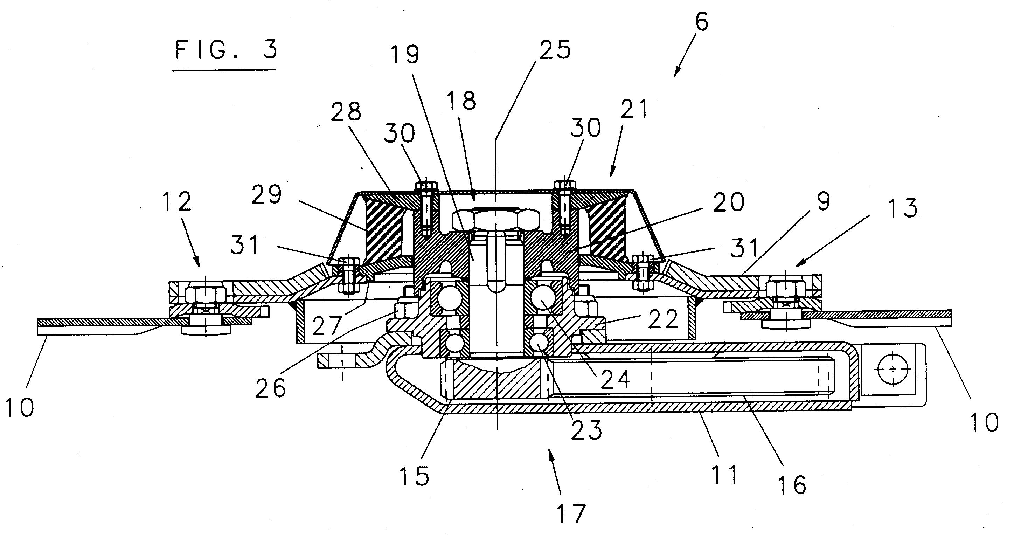

In einer in Fig.3 gezeigten Schnittdarstellung eines ersten Ausführungsbeispiel eines über einem Mähholm 11 angeordneten Schneidorganes 6 gemäß der Erfindung ist eine von dem im Mähholm 11 sich befindenden und als Stirnräder 15,16 ausgebildeten Antriebsorgan 17 ausgehende Antriebsverbindung 18 zu dem Schneidorgan 6 veranschaulicht. Die Antriebsverbindung 18 beinhaltet dabei eine Welle 19, die fest mit einem der Stirnräder 15 des Antriebsorganes 17 verbunden ist, sowie eine im oberen Bereich der Welle 19 verdrehfest angebrachte Nabe 20 und ein die Nabe 20 mit dem als Mähteller 9 ausgeführten Schneidorgan 6 verbindendes Kupplungselement 21. Die Welle 19 ist dabei in einem Lagergehäuse 22 mittels Wälzlager 23,24 um eine in etwa vertikale Achse 25 drehbar gelagert, wobei das Lagergehäuse 22 über Schraubverbindungen 26 am Mähholm 11 befestigt ist.

Wie aus Fig.3 weiterhin hervorgeht, besteht das Kupplungselement 21 aus einem unteren Anschraubflansch 27 sowie einem oberen Anschraubflansch 28, zwischen denen sich ein Verformungselement 29 erstreckt, welches eine einem Kreisring entsprechende Querschnittfläche aufweist und aus einem hochelastischen, Stoß- und Schlagbelastung aufnehmenden bzw. ausgleichenden und Drehschwingungen dämpfenden bzw. abbauenden Material, beispielsweise einem gummiähnlichen Material besteht. Über den oberen Anschraubflansch 28 erfolgt die Verbindung mit der Nabe 20, die als Schraubverbindung mit den Befestigungsschrauben 30 ausgeführt ist. Der untere Anschraubflansch 27 dient der tragenden Aufnahme des Mähtellers 9, der mittels einer weiteren Schraubverbindung 31 mit dem Anschraubflansch 27 des Kupplungselementes 21 in einer Antriebsverbindung steht. In diesem Ausführungsbeispiel ist das Kupplungselement 21 als ein einteiliges ringähnliches Verbindungs- und Tragelement ausgebildet. Es ist jedoch auch vorstellbar, für das Kupplungselement 21 entweder eine ein Schneidorgan 6 tragende Funktion oder eine Verbindungsfunktion mit einem Schneidorgan 6 vorzusehen. Eine Gewichtseinsparung bzw. eine damit einhergehende Reduzierung der kinetischen Rotationsenergie kann sich ergeben, wenn die Anschraubflansche 27,28 des Kupplungselementes 21 nicht als Stahlteile sondern als Leichtmetall- oder Kunststoffteile gefertigt werden. Weiterhin kann es sich als vorteilhaft erweisen, daß der im unteren Bereich des Kupplungselementes 21 sich befindende Anschraubflansch 27 auf der Nabe 20 mit einem geringen Spiel geführt ist, damit durch etwaige Unwuchten oder während der Beschleunigung eines Schneidorganes 6 auf seine Betriebsdrehzahl durchlaufene kritische Resonanzzustände nicht zu einer Verlagerung des Schneidorganes 6 aus seinem Drehzentrum führen können.

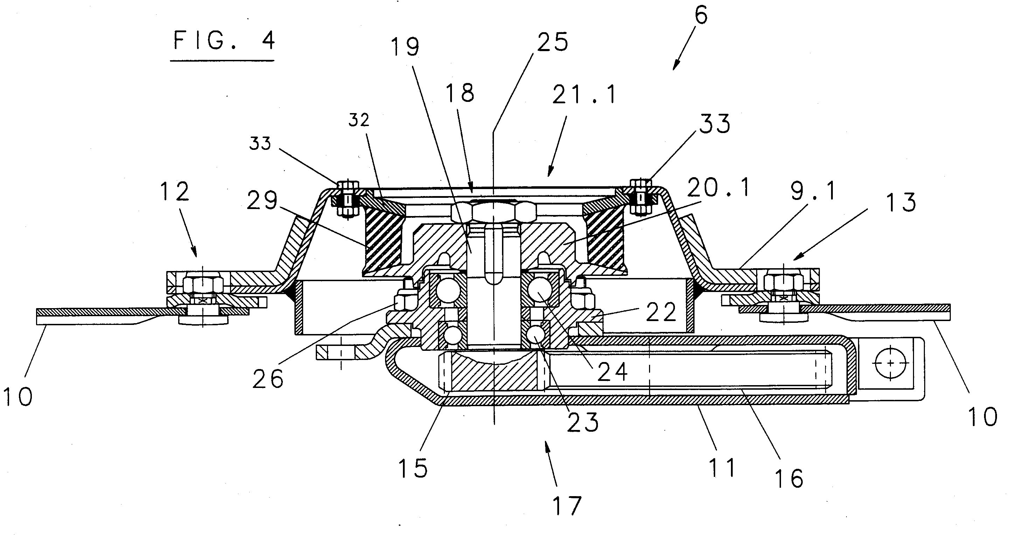

In einem weiteren Ausführungsbeispiel gemäß Fig.4 ist das Kupplungselement 21.1 derart ausgebildet, daß das Verformungselement 29 im unteren Bereich mit einer auf der Welle 19 arretierten Nabe 20.1 in einer Antriebsverbindung steht, während im oberen Bereich ein Flansch 32 zur Aufnahme und Befestigung eines Mähtellers 9.1 mittels einer Schraubverbindung 33 vorhanden ist.

In einer Weiterbildung der Erfindung ist es auch vorstellbar, ein in der jeweiligen Antriebsverbindung 18 untergebrachtes Kupplungselement so auszuführen, daß bei einer heftigen Stoß- und Schlagbelastung eines Schneidorganes 6 die Antriebsverbindung 18 unterbrochen wird und nach der Stoß- und Schlagbelastung nach einem vorgegebenen, von der Antriebsverbindung 18 des Schneidorganes 6 durchlaufenen Drehwinkels wieder hergestellt wird. Dadurch kann die während der Stoß- und Schlagbelastung von den übrigen, nicht blockierten Schneidorganen 6 abgegebene kinetische Rotationsenergie bzw. die von der Antriebsquelle bereitgestellte Antriebsenergie frei abfließen, so daß auch bei dieser Lösung ein wirkungsvoller Schutz des Antriebsorganes 17 eines Schneidorganes 6 gegen Überbeanspruchungen und Gewaltbrüchen gegeben ist. Ein Kupplungselement mit den vorstehend aufgeführten Eigenschaften kann beispielsweise als Nocken- oder Mitnehmerkupplung ausgebildet sein, wobei die Antriebsverbindung 18 zumindest nach einem von der Antriebsverbindung 18 des Schneidorganes 6 durchlaufenen Drehwinkel von 120 Grad bei einem mit drei Schneidwerkzeugen besetzten Schneidorgan oder zumindest nach 180 Grad bei einem mit zwei Schneidwerkzeugen ausgeführten Schneidorgan bzw. einem ganzzahligen Vielfachen davon wieder hergestellt wird.

Im Falle einer heftigen Stoß- und Schlagbelastung, beispielsweise bei einem Aufprall eines Schneidorganes 6 auf einen Stein oder dgl. Hindernisse findet nun bei der Entladung der von den übrigen, nicht blockierten Schneidorganen 6 gespeicherten kinetischen Rotationsenergie sowie der weiterhin bereitgestellten Antriebsenergie eine energieaufnehmende bzw. energieabbauende Verformung im Kupplungselement 21,21.1 des blockierten Schneidorganes 6 statt. Dabei tritt eine Verdrehung des im oberen Bereich des Kupplungselementes 21,21.1 angeordneten Anschraubflansche 28,32 gegenüber dem unteren Anschraubflansch 29 bzw. der Nabe 20.1 auf, wobei der Verdrehwinkel eine Größe einnimmt, die proportional zur Größe der von den nicht blockierten Schneidorganen 6 abgegebenen kinetischen Rotationsenergie und der von der Antriebsquelle gelieferten Antriebsenergie ist. Der Verdrehwinkel kann dabei Werte von bis zu 180 Grad annehmen. Bei diesem Vorgang findet keine Unterbrechung der Antriebverbindung 18 statt, so daß nach einer heftigen Stoß- und Schlagbelastung eines Schneidorganes 6 die Beschleunigung des Schneidorganes 6 auf seine Betriebsdrehzahl durch die Abgabe der während der Stoß- und Schlagbelastung vom Kupplungselement 20,20.1 aufgenommenen Energie unterstützt wird.

## Patentansprüche

1. Mähmaschine mit einer Anzahl auf einem Mähholm (11) angebrachter, um jeweils eine etwa vertikale Achse (25) rotierende Schneidorgane (6), welche an ihrem Umfang zumindest zwei drehbeweglich angeordnete, infolge der Fliehkraft radial nach außen stehende und eine Schneidwirkung erzeugende Schneidwerkzeuge (10) aufweisen, wobei benachbarte Schneidorgane (6) bezüglich der Anordnung der Schneidwerkzeuge (10) um einen vorgegebenen Drehwinkel gegeneinander versetzt sind und die Schneidwerkzeuge benachbarter Schneidorgane (6) sich überschneidende Bahnen beschreiben, mit die rotierenden Schneidorgane (6) von unten antreibenden, im Mähholm (11) untergebrachten und Zahnräder (15,16) umfassenden Antriebsorganen (17), wobei jedes von unten angetriebene, rotierende Schneidorgan (6) mit einer um die entsprechende vertikale Achse (25) rotierenden Welle (19) verbunden ist, die in einer im Mähholm (11) untergebrachten Lagerung (22,23,24,26) geführt ist, und wobei die Welle (19) an ihrem unteren Ende mit einem der Zahnräder (15,16) der Antriebsorgane (17) in Antriebsverbindung (18) mittels einer Sicherungseinrichtung (21) beim jeweiligen Schneidorgan (6) steht, so daß die Antriebsorgane (17) bei Normalbetrieb unbeschädigt bleiben, dadurch gekennzeichnet, daß die jeweilige Antriebsverbindung (18) von den im Mähholm (11) angeordneten Antriebsorganen (17) zu den Schneidorganen (6) als Sicherungseinrichtung (21) ein eine beim schlagartigen Blockieren eines Schneidorganes (6) bei zumindest annähernd gleichbleibender Drehzahl der Antriebsorgane (17) sich entladende kinetische Rotationsenergie aufnehmendes und während eines von der Antriebsverbindung (18) des Schneidorganes (6) durchlaufenen Drehwinkels die kinetische Rotationsenergie abbauendes bzw. dämpfendes und anschließend wieder aufbauendes Kupplungselement (21,21.1) aufweist, das die Schneidorgane (6) mit den Wellen (19) in Verbindung hält und die ursprünglichen Drehwinkel wieder herstellt, während der relative Winkel zwischen den Schneidorganen (6) und den Wellen (19) beim Blockieren mehr als 30 Grad betragen kann.

2. Mähmaschine nach Anspruch 1, dadurch gekennzeichnet, daß die jeweilige Antriebsverbindung (18) von den im Mähholm (11) angeordneten Antriebsorganen (17) zu den Schneidorganen (6) ein eine beim schlagartigen Blockieren eines Schneidorganes (6) sich entladende kinetische Rotationsenergie aufnehmendes und während eines von der Antriebsverbindung (18) des Schneidorganes (6) durchlaufenen Drehwinkels die kinetische Rotationsenergie abbauendes bzw. dämpfendes Kupplungselement (21,21.1) beinhaltet, welches die Antriebsverbindung (18) nicht unterbricht.

3. Mähmaschine nach Anspruch 1, dadurch gekennzeichnet, daß die jeweilige Antriebsverbindung (18) von den im Mähholm (11) angeordneten Antriebsorganen (17) zu den Schneidorganen (6) ein Kupplungselement umfaßt, wobei die Antriebsverbindung (18) unter Einwirkung einer Stoß- und Schlagbelastung unterbrochen und nach einem vorgegebenen, von der Antriebsverbindung (18) eines Schneidorganes (6) durchlaufenen Drehwinkels wieder hergestellt wird.

4. Mähmaschine nach einem der Ansprüche 1 bis 3, dadurch gekennzeichnet, daß der während einer Blockierung eines Schneidorganes (6) von der Antriebsverbindung (18) des betroffenen Schneidorganes (6) durchlaufene Drehwinkel einen Wert von bis zu 180 Grad einnimmt.

5. Mähmaschine nach einem der Ansprüche 1 bis 4, dadurch gekennzeichnet, daß die jeweilige Antriebsverbindung (18) von den im Mähholm (11) angeordneten und als Stirnräder (15,16) ausgebildeten Antriebsorganen (17) zu den als Mähteller (9,9.1) ausgeführten Schneidorganen (6) von einer in Wälzlagern (23,24) in einem Lagergehäuse (22) gelagerten Welle (19) gebildet wird, die an ihrem unteren Ende fest mit einem der Stirnräder (15) verbunden und an ihrem oberen Ende über Verbindungselemente an dem als Mähteller (9,9.1) ausgeführten Schneidorgan (6) befestigt ist.

6. Mähmaschine nach einem der Ansprüche 1 bis 5, dadurch gekennzeichnet, daß das Kupplungselement (21,21.1) als ein das Schneidorgan (6) tragendes Element ausgebildet ist.

7. Mähmaschine nach einem der Ansprüche 1 bis 6, dadurch gekennzeichnet, daß das Kupplungselement (21,21.1) ein Verbindungselement zwischen dem Schneidorgan (6) und einer auf der drehbar gelagerten Welle (19) angebrachten Nabe (20,20.1) ist.

8. Mähmaschine nach einem der Ansprüche 1 bis 7, dadurch gekennzeichnet, daß das Kupplungselement (21,21.1) als einteiliges, ringähnliches Verbindungs- und Tragelement ausgebildet ist, mit dem das als Mähteller (9,9.1) ausgeführte Schneidorgan (6) mit einer auf der drehbar gelagerten Welle (19) angebrachten Nabe (20,20.1) lösbar verbunden ist.

9. Mähmaschine nach einem der Ansprüche 1 bis 8, dadurch gekennzeichnet, daß im unteren Bereich des Kupplungselementes (21) ein tellerförmiger Anschraubflansch (27) zur Befestigung auf dem als Mähteller (9) ausgeführten Schneidorgan (6) angeordnet ist.

10. Mähmaschine nach einem der Ansprüche 1 bis 9, dadurch gekennzeichnet, daß im oberen Bereich des Kupplungselementes (21) ein Anschraubflansch (28) zur Befestigung auf der Nabe (20) angebracht ist.

11. Mähmaschine nach Anspruch 9 und 10, dadurch gekennzeichnet, daß das Kupplungselement (21) zwischen den Anschraubflanschen (27,28) ein Verformungselement (29) mit einer einem Kreisring entsprechenden Querschnittsfläche aufweist.

12. Mähmaschine nach Anspruch 11, dadurch gekennzeichnet, daß das Verformungselement (29) aus einem hochelastischen, Stoß- und Schlagbelastung aufnehmenden bzw. ausgleichenden und Drehschwingungen dämpfenden bzw. abbauenden Material besteht.

13. Mähmaschine nach einem der Ansprüche 9 bis 12, dadurch gekennzeichnet, daß die im unteren und im oberen Bereich vorgesehenen Anschraubflansche (27,28) des Kupplungselementes (21) als Stahlteile ausgeführt sind.

14. Mähmaschine nach einem der Ansprüche 9 bis 12, dadurch gekennzeichnet, daß die im unteren und im oberen Bereich vorgesehenen Anschraubflansche (27,28) des Kupplungselementes (21) als Leichtmetall- oder Kunststoffteile ausgebildet sind.

15. Mähmaschine nach einem der Ansprüche 9 bis 14, dadurch gekennzeichnet, daß der im unteren Bereich des Kupplungselementes (21) vorgesehene Anschraubflansch (27) mit einem geringen Spiel auf der Nabe (20) geführt ist.

16. Mähmaschine nach einem der Ansprüche 11 bis 15, dadurch gekennzeichnet, daß das Verformungselement (29) des Kupplungselementes (21.1) im unteren Bereich mit einer auf der Welle (19) arretierten Nabe (20.1) verbunden ist und im oberen Bereich einen Flansch (32) zur Aufnahme des als Mähteller (9.1) ausgeführten Schneidorganes (6) aufweist.

17. Mähmaschine nach einem der Ansprüche 1 bis 3, dadurch gekennzeichnet, daß das Kupplungselement (21,21.1) als Nocken- oder Mitnehmerkupplung ausgeführt ist.

18. Mähmaschine nach den Ansprüchen 1, 3 und 17, dadurch gekennzeichnet, daß der von der Antriebsverbindung (18) des Schneidorganes (6) nach einer Unterbrechung der Antriebsverbindung (18) bis zur Wiederherstellung der Antriebsverbindung (18) durchlaufene Drehwinkel zumindest einem Winkel von 120 Grad bei einem Schneidorgan mit drei Schneidwerkzeugen oder zumindest einem Winkel von 180 Grad bei einem Schneidorgan mit zwei Schneidwerkzeugen bzw. einem ganzzahligen Vielfachen davon entspricht.
